# EUROPEAN PATENT APPLICATION

(11) **EP 4 071 542 A1**
(43) Date of publication of application: **12.10.2022**
(21) Application number: 20895083.2
(22) Date of filing: 04.12.2020
(51) Int. Cl.: G02B 30/00, B60K 35/00, G02B 27/02, G09F 9/00, G09F 9/30, H04N 5/64, H04N 13/346, H04N 13/395

(54) **IMAGE DISPLAY DEVICE**

(30) Priority: 05.12.2019 JP 2019220784; 05.12.2019 JP 2019220785; 13.12.2019 JP 2019225353; 25.12.2019 JP 2019235337
(71) Applicant: KOITO MANUFACTURING CO., LTD., Minato-ku, Tokyo 108-8711 (JP)
(72) Inventor: OGATA Yoichi, Shizuoka-shi, Shizuoka 424-8764 (JP)
(74) Representative: Grünecker Patent- und Rechtsanwälte PartG mbB
(86) International application number: PCT/JP2020/045267
(87) International publication number: WO 2021/112227

(57) **Abstract**

A beam splitter (BS2) reflects a portion of light emitted from a first image projection unit (s1) in a first direction and transmits a different portion of the light in a second direction. A first retroreflection unit (RR1) retroreflects the light reflected in the first direction toward the beam splitter (BS2). A second retroreflection unit (RR2) retroreflects the light transmitted in the second direction toward the beam splitter (BS2). The beam splitter (BS2) transmits the light retroreflected by the first retroreflection unit (RR1) toward an image-forming optical unit (DM) and reflects the light retroreflected by the second retroreflection unit (RR2) toward the image-forming optical unit (DM).

## Description

### Field

The presently disclosed subject matter relates to an image displaying device in which a projected image is displayed so as to appear to overlap with a background.

### Background

As an example of the image displaying device as described above, Patent Document 1 discloses a head-up display (hereinafter, HUD) of a head-mounted type.

### Citation List

### Patent Document

Patent Document 1: Japanese Patent Publication No. 2018-528446 A

### Summary

### Technical Problem

It is demanded to improve the convenience of such an image displaying device in which a projected image is displayed so as to appear to overlap with a background.

### Solution to Problem

In order to meet the demand described above, an illustrative aspect of the presently disclosed subject matter provides an image displaying device, comprising:
a first image projector configured to emit light corresponding to a first image adapted to be projected to eyes of a user;
a beam splitter configured to reflect a portion of the light emitted from the first image projector in a first direction while allowing another portion of the light to transmit in a second direction;
a first retroreflector configured to retroreflect the light reflected in the first direction toward the beam splitter;
a second retroreflector configured to retroreflect the light transmitted in the second direction toward the beam splitter; and
an imaging optics configured to form an image corresponding to incident light in a space between the eyes of the user and a background,
wherein the beam splitter is configured to allow the light retroreflected by the first retroreflector to transmit toward the imaging optics while reflecting the light retroreflected by the second retroreflector toward the imaging optics.

According to the above configuration, since both the light reflected by the beam splitter and the light transmitted through the beam splitter are subjected to the image forming with the imaging optics, degradation in the brightness of the image formed in the space between the user's eyes and the background is suppressed, so that the visibility of the image is enhanced. Accordingly, it is possible to improve the convenience of the image displaying device in which the projected image is displayed so as to appear to overlap with the background.

In order to meet the demand described above, an illustrative aspect of the presently disclosed subject matter provides an image displaying device, comprising:
a first image projector configured to be driven by a signal supplied from an image signal supplier to emit light corresponding to a first image adapted to be projected to eyes of a user;
a second image projector configured to be driven by a signal supplied from the image signal supplier to emit light corresponding to a second image adapted to be projected to the eyes of the user;
an imaging optics configured to form an image corresponding to incident light in a space between the eyes of the user and a background, and
a beam splitter configured to reflect the light coming from the first image projector and incident on a first face thereof toward the imaging optics while allowing light coming from the second image projector and incident on a second face thereof to transmit toward the imaging optics.

According to the above configuration, signals inputted from a common image signal supplier operate the first image projector and the second image projector for forming a plurality of images in the space located between the eyes of the user and the background. As a result, compared to a configuration in which an individual image projecting device is assigned to each of a plurality of images formed at different positions and drive control is performed through individual wirings, it is possible to suppress an increase in the number of components, an increase in the size and weight of the device, an increase in the complexity of the device configuration, and the like. Accordingly, it is possible to improve the convenience of the image displaying device in which the projected image is displayed so as to appear to overlap with the background.

In order to meet the demand described above, an illustrative aspect of the presently disclosed subject matter provides an image displaying device, comprising:
a light source section configured to emit laser light corresponding to an image adapted to be projected to eyes of a user;
a first imaging optics configured to form an image corresponding to incident light at a first position in a space between the eyes of the user and a background;
a second imaging optics configured to form an image corresponding to incident light at a second position in the space that is different from the first position; and
a first beam splitter configured to reflect a portion of the laser light toward one of the first imaging optics and the second imaging optics while allowing another portion of the laser light to transmit toward the other one of the first imaging optics and the second imaging optics.

According to the configuration described above, it is possible to form images to be projected on the eye of the user at a plurality of positions different from each other in the depth direction while using a single light source section. In addition, since the laser light emitted from the light source section and then transmitted through the first beam splitter and the laser light emitted from the light source section and then reflected by the first beam splitter are subjected to the image forming with individual imaging optical systems, it is possible to increase the degree of freedom relating to the adjustment of the positions where the images are formed. Accordingly, it is possible to improve the convenience of the image displaying device in which the projected image is displayed so as to appear to overlap with the background.

In order to meet the demand described above, an illustrative aspect of the presently disclosed subject matter provides an image displaying device, comprising:
a first image projector configured to emit light corresponding to a first image adapted to be projected to eyes of a user;
a second image projector configured to emit light corresponding to a second image adapted to be projected to the eyes of the user;
an imaging optics configured to form the first image at a first position in a space between the eyes of the user and a background, and to form the second image at a second position in the space that is different from the first position; and
a controller configured to control the first image projector and the second image projector so as to change a balance between a brightness of the first image and a brightness of the second image over time.

According to the configuration as described above, the user can visually recognize the stereoscopic illusion image in front of the background. Accordingly, it is possible to improve the convenience of the image displaying device in which the projected image is displayed so as to appear to overlap with the background.

It should be noted that the expression "toward the n-th imaging optics" used herein is not intended to limitedly depict a configuration in which a certain optical member transmits or reflects light directly toward the n-th imaging optics. The expression includes a configuration in which another optical member is interposed between the optical member and the n-th imaging optics as long as the light transmitted through or reflected by the optical member finally reaches the n-th imaging optics.

### Brief Description of Drawings

FIG. 1 illustrates a configuration of an image displaying device according to a first embodiment.
FIG. 2 illustrates a comparative example for explaining advantages of a second retroreflector illustrated in FIG. 1.
FIG. 3 is a diagram for explaining advantages of the second retroreflector illustrated in FIG. 1.
FIG. 4 is a diagram for explaining advantages of the second retroreflector illustrated in FIG. 1.
FIG. 5 illustrates another exemplary configuration of the image displaying device illustrated in FIG. 1.
FIG. 6 illustrates another exemplary configuration of the image displaying device illustrated in FIG. 1.
FIG. 7 is a diagram for explaining operations of the image displaying device illustrated in FIG. 6.
FIG. 8 illustrates another exemplary configuration of the image displaying device illustrated in FIG. 1.
FIG. 9 is a diagram for explaining operations of the image displaying device illustrated in FIG. 8.
FIG. 10 illustrates a configuration of an image displaying device according to a second embodiment.
FIG. 11 illustrates another exemplary configuration of the image displaying device illustrated in FIG. 10.
FIG. 12 illustrates another exemplary configuration of the image displaying device illustrated in FIG. 10.
FIG. 13 illustrates a configuration of an image displaying device according to a third embodiment.
FIG. 14 illustrates operations performed by a part of the image displaying device illustrated in FIG. 13.
FIG. 15 illustrates operations performed by another part of the image displaying device illustrated in FIG. 13.
FIG. 16 illustrates aerial image displayed by the image displaying device illustrated in FIG. 13.
FIG. 17 illustrates another exemplary configuration of the image displaying device illustrated in FIG. 13.
FIG. 18 illustrates aerial image displayed by the image displaying device illustrated in FIG. 17.
FIG. 19 illustrates a configuration of an image displaying device according to a fourth embodiment.
FIG. 20 illustrates a functional configuration of the image displaying device illustrated in FIG. 19.
FIG. 21 illustrates an exemplary operation of the image displaying device illustrated in FIG. 19.
FIG. 22 illustrates another exemplary operation of the image displaying device illustrated in FIG. 19.
FIG. 23 illustrates another exemplary operation of the image displaying device illustrated in FIG. 19.

### Description of Embodiments

Exemplary embodiments will be described below in detail with reference to the accompanying drawings. The same or equivalent components, members, and processes illustrated in the respective drawings are denoted by the same reference numerals, and duplicative descriptions will be omitted as appropriate.

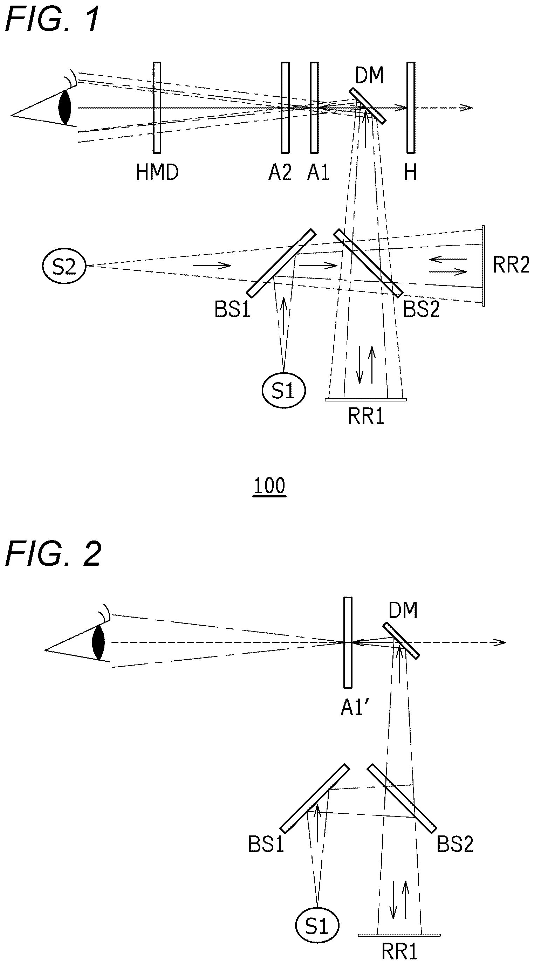

FIG. 1 illustrates a configuration of an image displaying device 100 according to a first embodiment. The image displaying device 100 includes a first beam splitter BS1, a first image projector S1, a second image projector S2, and a head-mounted display HMD.

Through the use of the image displaying device 100, a user visually recognizes a first image A1 projected from the first image projector S1, a second image A2 projected from the second image projector S2, and a third image H projected from the head-mounted display HMD at positions different from each other in a depth direction. In the following descriptions, the direction in which the first image A1, the second image A2, and the third image H are arranged is defined as the depth direction. The direction corresponding to a longitudinal direction in FIG. 1 among directions orthogonal to the depth direction is defined as an up-down direction. A direction orthogonal to the depth direction and the up-down direction is defined as a left-right direction. The expressions related to these directions are used for convenience of explanation, and are not intended to limit the posture of the image displaying device 100 in actual use.

The first beam splitter BS1 is a member that partially transmits incident light and partially reflects the incident light. As the first beam splitter BS1, a partially reflective plate having a film for adjusting the reflectivity formed on the surface thereof can be used. The first beam splitter BS1 is disposed so as to form an angle of 45 degrees with the up-down direction and the depth direction. The first beam splitter BS1 is disposed so as to form an angle of 45 degrees with the optical axis of the light emitted from each of the first image projector S1 and the second image projector S2.

The image displaying device 100 includes a first retroreflector RR1, a second retroreflector RR2, and a second beam splitter BS2. Each of the first retroreflector RR1 and the second retroreflector RR2 is an optical member that reflects incident light while maintaining condensing property thereof relative to the incident direction. As each of the first retroreflector RR1 and the second retroreflector RR2, a structure in which minute glass beads are laid on an obverse side of the reflective film or a structure using a prism can be used. The first retroreflector RR1 is disposed below the second beam splitter BS2. The first retroreflector RR1 is disposed such that a principal face thereof faces the up-down direction. The second retroreflector RR2 is disposed so as to be aligned in the depth direction with the first beam splitter BS1 and the second beam splitter BS2. The second retroreflector RR2 is disposed such that a principal face thereof faces the depth direction. As used herein, the expression "principal face" means a face having a maximum area in a plate-shaped member.

The second beam splitter BS2 is a member that partially transmits incident light and partially reflects the incident light. As the second beam splitter BS2, a partially reflective plate having a film for adjusting the reflectivity formed on the surface thereof can be used. The second beam splitter BS2 is disposed so as to form an angle of 45 degrees with the up-down direction and the depth direction. The second beam splitter BS2 is disposed so as to form an angle of 45 degrees with the optical axis of the light emitted from each of the first image projector S1 and the second image projector S2. The first beam splitter BS1 and the second beam splitter BS2 are inclined in opposite directions. The first beam splitter BS1 and the second beam splitter BS2 are disposed so as to face each other in the depth direction.

In each of the first beam splitter BS1 and the second beam splitter BS2, any balance between the transmittance and the reflectance of light can be selected. For example, each of the transmittance and the reflectance may be 50%. The inclination angles of each of the first beam splitter BS1 and the second beam splitter BS2 with respect to each of the optical axis of the light emitted from the first image projector S1 and the optical axis of the light emitted from the second image projector S2 are not limited to 45 degrees. Each inclination angle can be appropriately determined according to the relationship between the position of the first image projector S1, the position of the second image projector S2, and positions where images are formed.

The image displaying device 100 includes a dichroic mirror DM. The dichroic mirror DM is an optical member that reflects light of a specific wavelength and transmits light of other wavelengths. The dichroic mirror DM is disposed above the first retroreflector RR1 and the second beam splitter BS2. The dichroic mirror DM is disposed so as to form an angle of 45 degrees with the depth direction. The dichroic mirror DM is configured to reflect wavelengths of visible light emitted from each of the first image projector S1 and the second image projector S2, and to transmit other wavelengths of visible light. The dichroic mirror DM is an example of the imaging optics.

At least one imaging lens may be disposed between the second beam splitter BS2 and the dichroic mirror DM. The imaging lens is an optical member for focusing the light transmitted through the second beam splitter BS2 at a prescribed position in the space.

The head-mounted display HMD is a device for forming a third image H in a space located between an eye of the user and the background. The head-mounted display HMD is an example of a third image projector. As the head-mounted display HMD, a well-known configuration such as a configuration using a light guide plate and a diffraction grating, a configuration using a light guide plate and an optical element can be used.

Each of the first image projector S1, the second image projector S2, and the head-mounted display HMD is a device for emitting light constituting an image. The first image projector S1, the second image projector S2, and the head-mounted display HMD form images at different distances from the user's eyes. The first image projector S1 is disposed below the first beam splitter BS1. The first image projector S1 emits light to a face of the first beam splitter BS1 facing the second beam splitter BS2. The second image projector S2 is disposed so as to be aligned in the depth direction with the first beam splitter BS1, the second beam splitter BS2, and the second retroreflector RR2. The second image projector S2 emits light to a face of the first beam splitter BS1 that does not face the second beam splitter BS2. The head-mounted display HMD is disposed so as to be located between the eye of the user and the dichroic mirror DM.

As each of the first image projector S1 and the second image projector S2, a liquid crystal display device including a backlight, a self-emitting organic EL display device, a projector device using a light source and a modulation element, or the like can be used. The image projected by each of the first image projector S1, the second image projector S2, and the head-mounted display HMD may be a still image or a video image. The projected images may be the same or different from each other. Each of the first image projector S1, the second image projector S2, and the head-mounted display HMD may appropriately include an optical member such as a lens.

The dashed chain lines represent a path of light emitted from the first image projector S1 for projecting the first image A1. The dashed line represents a path of light emitted from the second image projector S2 for projecting the second image A2. The chain lines represent a path of light emitted from the head-mounted display HMD for projecting the third image H.

The light emitted from the first image projector S1 is partially reflected by the first beam splitter BS1 and is incident on the second beam splitter BS2. The light is partially reflected by the second beam splitter BS2 and is incident on the first retroreflector RR1. The light is retroreflected by the first retroreflector RR1 and is re-incident on the second beam splitter BS2. The light re-incident on the second beam splitter BS2 partially transmits through the second beam splitter BS2 and is reflected by the dichroic mirror DM. The first image A1 is formed with the light reflected by the dichroic mirror DM at a position distant from the dichroic mirror DM with a first distance. The light formed as the first image A1 passes through the head-mounted display HMD and reaches the eye of the user. Accordingly, the user visually recognizes the first image A1 through the head-mounted display HMD.

The light emitted from the second image projector S2 partially transmits through the first beam splitter BS1 and is incident on the second beam splitter BS2. The light is partially reflected by the second beam splitter BS2 and is incident on the first retroreflector RR1. The light is retroreflected by the first retroreflector RR1 and is re-incident on the second beam splitter BS2. The light re-incident on the second beam splitter BS2 partially transmits through the second beam splitter BS2 and is reflected by the dichroic mirror DM. The second image A2 is formed with the light reflected by the dichroic mirror DM at a position distant from the dichroic mirror DM with a second distance. The second distance is longer than the first distance. The light formed as the second image A2 passes through the head-mounted display HMD and reaches the eye of the user. Accordingly, the user visually recognizes the second image A2 in front of the first image A1 through the head-mounted display HMD.

The third image H is formed with the light emitted from the head-mounted display HMD at a position distant from the head-mounted display with a third distance. The third distance is determined by an optical system included in the head-mounted display HMD. The third distance is determined such that the distance from the dichroic mirror DM is different from each of the first distance and the second distance. The third distance is determined such that the third image H is formed at a position where is in an opposite side of the positions where the first image A1 and the second image A2 are formed relative to the dichroic mirror DM. Accordingly, the user visually recognizes the third image H behind the first image A1 and the second image A2 through the head-mounted display HMD.

At the same time, light from the background passes through the dichroic mirror DM and the head-mounted display HMD and reaches the eye of the user. Accordingly, the user visually recognizes the first image A1, the second image A2, and the third image H having different positions in the depth direction as aerial images overlapping with the background.

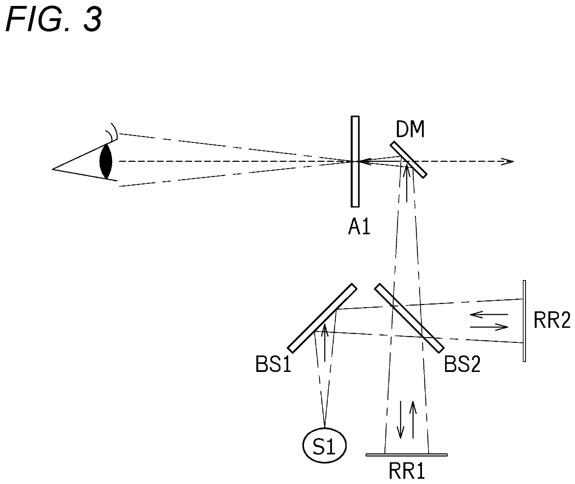

The image displaying device 100 includes a second retroreflector RR2. The advantages of the second retroreflector RR2 will be described with reference to FIGS. 2 and 3.

FIG. 2 illustrates a comparative example in which the second retroreflector RR2 is not used. In this case, a first image A1' is formed only with light emitted from the first image projector S1 and reaching the dichroic mirror DM after having retroreflected by the first retroreflector RR1 and then transmitted through the second beam splitter BS2. Accordingly, of the light reflected by the first beam splitter BS1, the light that first transmitted through the second beam splitter BS2 is not used for forming the first image A1'.

On the other hand, as illustrated in FIG. 3, in a case where the first retroreflector RR1 and the second retroreflector RR2 are used, the light reflected by the first beam splitter BS1 and first transmitted through the second beam splitter BS2 is incident on the second retroreflector RR2. As a result, the light retroreflected by the second retroreflector RR2 is also reflected by the second beam splitter BS2 and reaches the dichroic mirror DM. Accordingly, since the light reflected by the first beam splitter BS1 and first transmitted through the second beam splitter BS2 is also used for forming the first image A1, it is possible to suppress a decrease in the amount of light of the first image A1.

Here, since the light retroreflected by the first retroreflector RR1 and the light retroreflected by the second retroreflector RR2 correspond to the same image to be projected, it is necessary to simultaneously reach the same position in the dichroic mirror DM. Accordingly, in a case where the optical characteristics of the first retroreflector RR1 and the second retroreflector RR2 are the same, it is preferable to make the distance from the first retroreflector RR1 to the second beam splitter BS2 and the distance from the second retroreflector RR2 to the second beam splitter BS2 equal to each other.

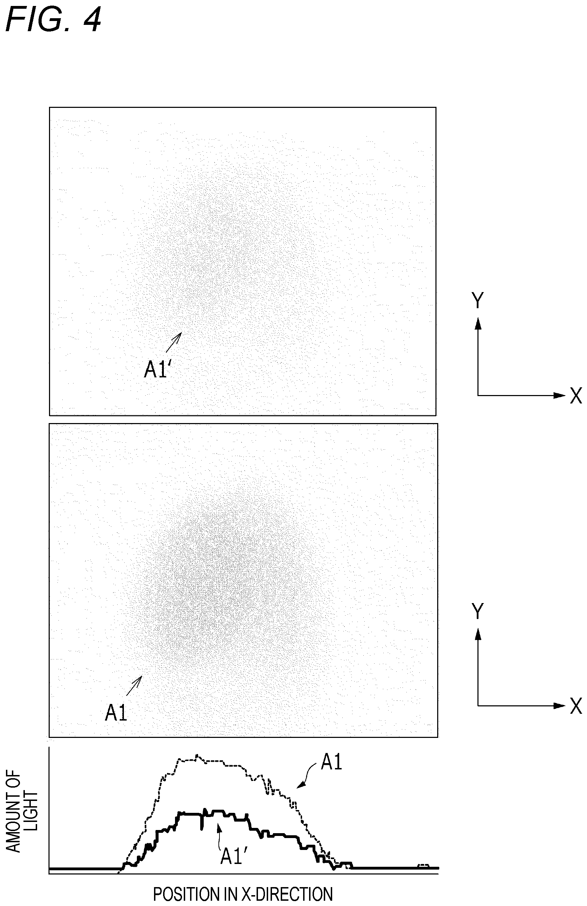

FIG. 4 illustrates an observation result of the first image A1' projected by the configuration illustrated in FIG. 2, and an observation result of the first image A1 projected by the configuration illustrated in FIG. 3. FIG. 4 also illustrates an observation result of the spatial dependency of the amount of light of the first image A1' along the X-direction at a specific position in the Y-direction as well as an observation result of the spatial dependency of the amount of light of the first image A1 along the X-direction. The observation result of the first image A1' is illustrated with a solid line. The observation result of the first image A1 is illustrated with dashed lines.

It is understood that the amount of light of the first image A1 formed with the first retroreflector RR1 and the second retroreflector RR2 is more than the amount of light of the first image A1' formed only with the first retroreflector RR1. In other words, it can be confirmed that a decrease in the amount of light is suppressed by also using the light reflected by the first beam splitter BS1 and first transmitted through the second beam splitter BS2 for forming the first image A1.

For the same reason, it is possible to suppress a decrease in the amount of light of the second image A2 projected from the second image projector S2. In other words, since the decrease in the amount of light of the images formed so as to be arranged in the depth direction is suppressed, it is possible to improve the visibility of the image displayed by the image displaying device 100. Accordingly, it is possible to improve the convenience of the image displaying device in which the projected image is displayed so as to appear to overlap with the background.

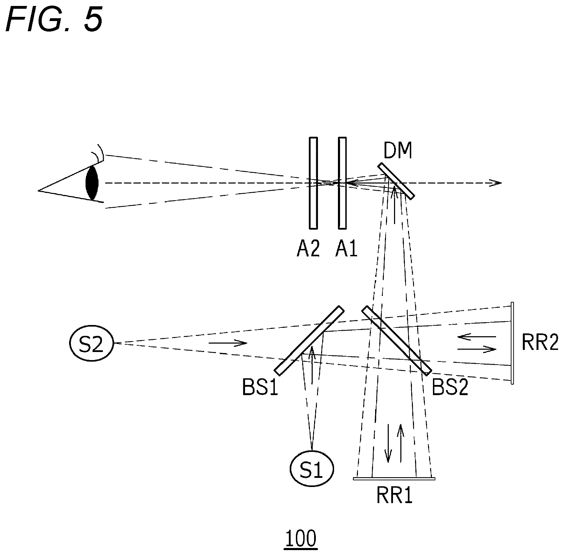

As illustrated in FIG. 5, in the image displaying device 100, the head-mounted display HMD may be omitted.

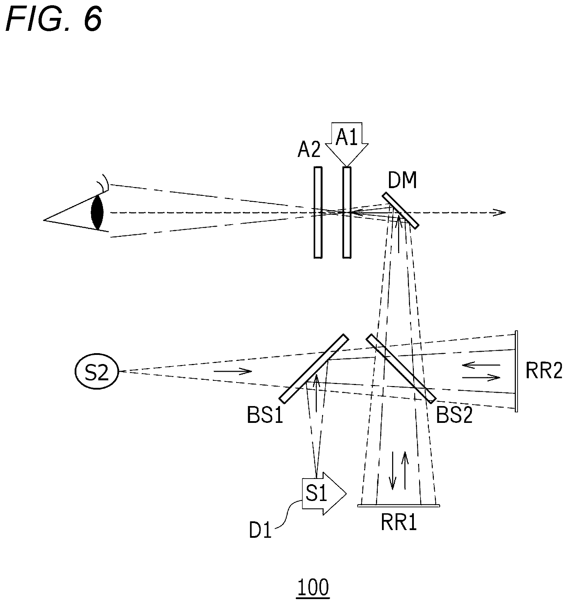

As illustrated in FIG. 6, the image displaying device 100 may include a first driver D1. The first driver D1 is a component that mechanically changes the position and the angle of the first image projector S1, and is configured to change the relative position to the second beam splitter BS2 by moving the first image projector S1.

As the first driver D1, a known motor or actuator can be used. When the first driver D1 moves the first image projector S1 in an arrow direction along the depth direction, the position where the first image A1 is formed changes in an arrow direction along the up-down direction. Although not illustrated, when the first driver D1 moves the first image projector S1 in the left-right direction, the position where the first image A1 is formed also changes in the left-right direction. When the first driver D1 moves the first image projector S1 in the up-down direction, the position where the first image A1 is formed changes in the depth direction.

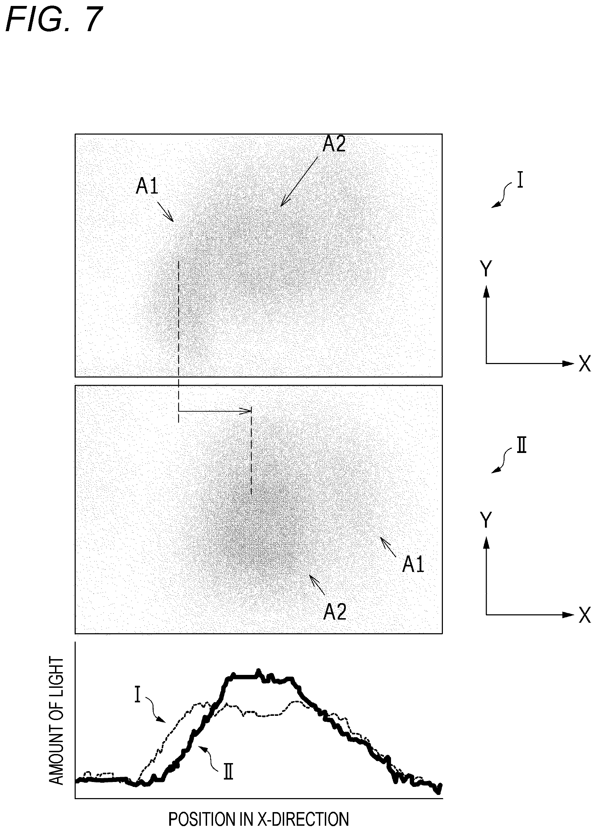

The symbol I in FIG. 7 illustrates observation results of the first image A1 and the second image A2 projected by the configuration illustrated in FIG. 6. The symbol II illustrates observation results of the first image A1 and the second image A2 projected under a condition that the first image projector S1 is moved by the first driver D1. FIG. 7 also illustrates an observation result of the spatial dependency of the light amount of the first image A1 along the X-direction at a specific position in the Y-direction as well as an observation result of the spatial dependency of the light amount of the second image A2 along the X-direction. The observation result corresponding to the state of the symbol I is illustrated with dashed lines. The observation result corresponding to the state of the symbol II is illustrated with a solid line.

By moving the first image projector S1 with the first driver D1, it can be confirmed that the position where the first image A1 is formed has changed. In this example, since the position of the second image projector S2 is not changed, the position where the second image A2 is formed is also not changed.

In other words, according to the configuration illustrated in FIG. 6, the position of the first image A1 with respect to the second image A2 can be changed by changing the relative positions of the first image projector S1 and the second beam splitter BS2 under a condition that the first image A1 and the second image A2 are projected so as to be aligned in the depth direction.

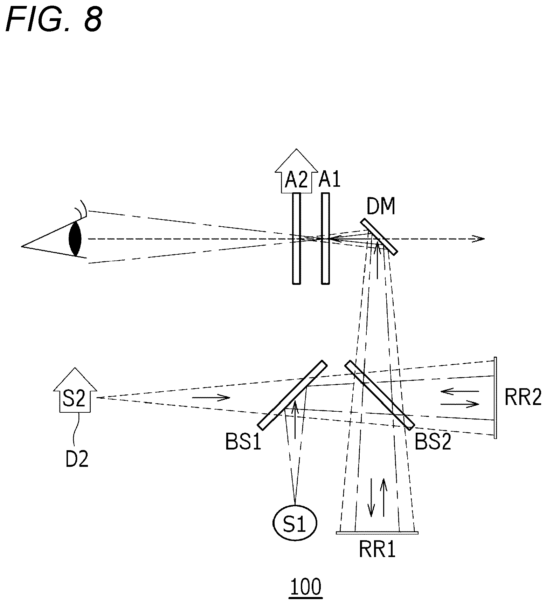

As illustrated in FIG. 8, the image displaying device 100 may include a second driver D2. The second driver D2 is a component that mechanically changes the position and the angle of the second image projector S2, and is configured to change the relative position with the second beam splitter BS2 by moving the second image projector S2.

As the second driver D2, a known motor or actuator can be used. When the second driver D2 moves the second image projector S2 in an arrow direction along the up-down direction, the position where the second image A2 is formed changes in an arrow direction along the up-down direction. Although not illustrated, when the second driver D2 moves the second image projector S2 in the left-right direction, the position where the second image A2 is formed also changes in the left-right direction. When the second driver D2 moves the second image projector S2 in the depth direction, the position where the second image A2 is formed also changes in the depth direction.

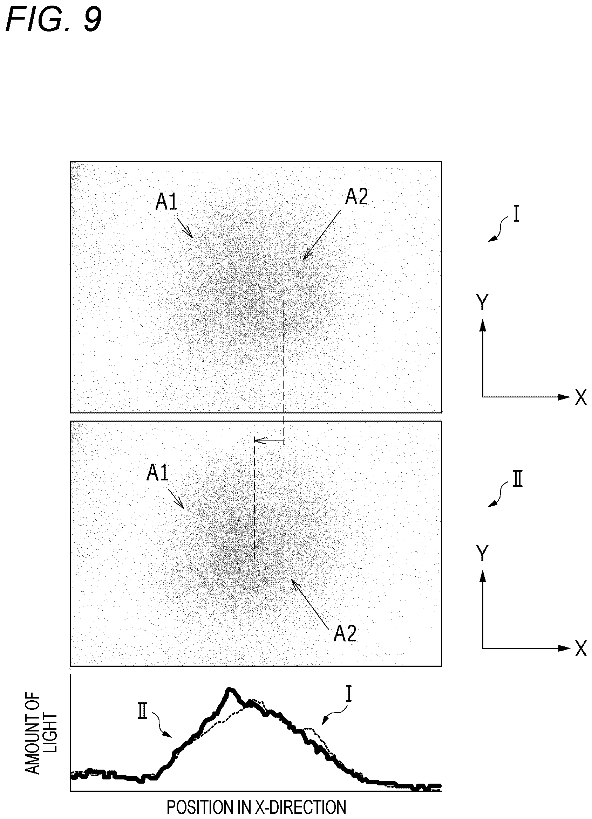

The symbol I in FIG. 9 illustrates observation results of the first image A1 and the second image A2 projected by the configuration illustrated in FIG. 8. The symbol II illustrates observation results of the first image A1 and the second image A2 projected under a condition that the first image projector S1 is moved by the first driver D1. FIG. 9 also illustrates an observation result of the spatial dependency of the light amount of the first image A1 along the X-direction at a specific position in the Y-direction as well as an observation result of the spatial dependency of the light amount of the second image A2 along the X-direction. The observation result corresponding to the state of the symbol I is illustrated with dashed lines. The observation result corresponding to the state of the symbol II is illustrated with a solid line.

By moving the second image projector S2 with the second driver D2, it can be confirmed that the position where the second image A2 is formed has changed. In this example, since the position of the first image projector S1 is not changed, the position where the first image A1 is formed is also not changed.

In other words, according to the configuration illustrated in FIG. 8, the position of the second image A2 with respect to the first image A1 can be changed by changing the relative positions of the second image projector S2 and the second beam splitter BS2 under a condition that the first image A1 and the second image A2 are projected so as to be aligned in the depth direction.

By combining the first driver D1 illustrated in FIG. 6 and the second driver D2 illustrated in FIG. 8, the relative positions of the first image A1 and the second image A2 projected so as to be aligned in the depth direction can be changed.

The configuration according to the first embodiment described above is a mere example for facilitating understanding of the gist of the presently disclosed subject matter. The configuration according to the first embodiment can be appropriately modified without departing from the gist of the presently disclosed subject matter.

In the configuration illustrated in FIG. 1, the position of the first image A1, the position of the second image A2, and the position of the third image H that are visually recognized by the user are different from each other in the depth direction. However, at least one of the position of the first image A1, the position of the second image A2, and the position of the third image H may be the same as at least one of the other two positions in the depth direction.

In the configuration illustrated in each of FIGS. 5, 6, and 8, the position of the first image A1 and the position of the second image A2 visually recognized by the user are different in the depth direction. However, the position of the first image A1 and the position of the second image A2 may be the same in the depth direction.

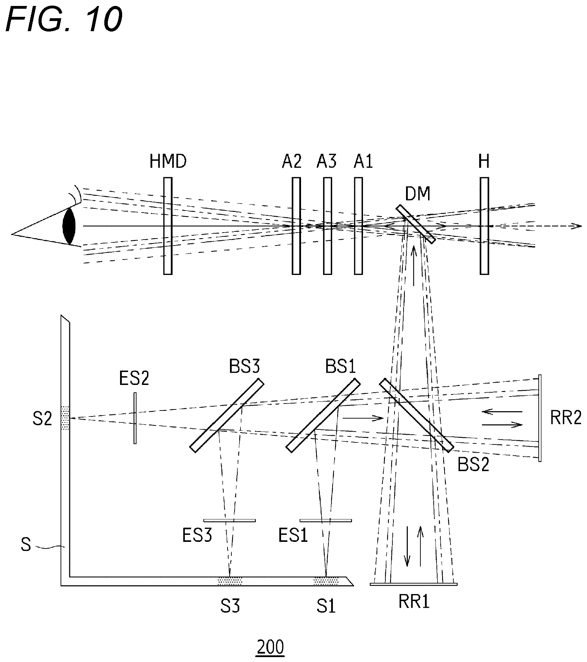

FIG. 10 illustrates a configuration of an image displaying device 200 according to a second embodiment. Components that are substantially the same as those of the image displaying device 100 illustrated in FIG. 1 are assigned with the same reference numerals, and repetitive descriptions for those will be omitted.

The image displaying device 200 includes an image projecting device S. The image projecting device S includes a first image projector S1, a second image projector S2, and a third image projector S3. The first image projector S1, the second image projector S2, and the third image projector S3 are disposed at different positions in the image projecting device S. Each of the first image projector S1, the second image projector S2, and the third image projector S3 is configured to be capable of displaying an image.

Through the use of the image displaying device 200, the user visually recognizes a first image A1 displayed on the first image projector S1, a second image A2 displayed on the second image projector S2, a third image A3 displayed on the third image projector S3, and a fourth image H projected from a head-mounted display HMD at positions different from each other relative to the depth direction.

The image displaying device 200 includes a third beam splitter BS3. The third beam splitter BS3 is a member that partially transmits incident light and partially reflects the incident light. As the third beam splitter BS3, a partially reflective plate having a film for adjusting the reflectivity formed on the surface thereof can be used. The third beam splitter BS3 is disposed so as to form an angle of 45 degrees with the up-down direction and the depth direction. The third beam splitter BS3 is disposed so as to form an angle of 45 degrees with the optical axis of the light emitted from each of the second image projector S2 and the third image projector S3. The third beam splitter BS3 is disposed so as to be aligned with the first beam splitter BS1 and the second beam splitter BS2 in the depth direction. The first beam splitter BS1 is disposed between the second beam splitter BS2 and the third beam splitter BS3 in the depth direction.

In the third beam splitter BS3, any balance between the transmittance and the reflectance of the light can be selected. For example, each of the transmittance and the reflectance may be 50%. The inclination angle of the third beam splitter BS3 with respect to each of the optical axis of the light emitted from the second image projector S2 and the optical axis of the light emitted from the third image projector S3 is not limited to 45 degrees. The inclination angle can be appropriately determined according to the relationship between the position of the second image projector S2, the position of the third image projector S3, and positions where images are formed.

The image projecting device S is a device for emitting light constituting an image. The image projecting device S and the head-mounted display HMD form images at different distances from the user's eyes. The first image projector S1 is disposed below the first beam splitter BS1. The first image projector S1 emits light to a face of the first beam splitter BS1 facing the second beam splitter BS2. The second image projector S2 is disposed so as to be aligned with the first beam splitter BS1, the second beam splitter BS2, the third beam splitter BS3, and the second retroreflector RR2 in the depth direction. The second image projector S2 emits light to a face of the third beam splitter BS3 that does not face the first beam splitter BS1. The third image projector S3 is disposed below the third beam splitter BS3. The third image projector S3 emits light to a face of the third beam splitter BS3 facing the first beam splitter BS1.

The image projecting device S is a device that is driven by a signal inputted from an image signal supplier (not illustrated) to display an image. The first image projector S1, the second image projector S2, and the third image projector S3 are driven by signals inputted from a common image signal supplier. The image projecting device S has two planes forming a bent portion. As the image projecting device S, for example, an organic EL element or an inorganic EL element having flexibility can be used.

The image displaying device 200 includes a first electromagnetic shutter ES1, a second electromagnetic shutter ES2, and a third electromagnetic shutter ES3. The first electromagnetic shutter ES1 is disposed so as to face a light emitting face of the first image projector S1. The second electromagnetic shutter ES2 is disposed so as to face a light emitting face of the second image projector S2. The third electromagnetic shutter ES3 is disposed so as to face a light emitting face of the third image projector S3. Each of the first electromagnetic shutter ES1, the second electromagnetic shutter ES2, and the third electromagnetic shutter ES3 is an optical member that controls whether light is transmitted or not. As each of the first electromagnetic shutter ES1, the second electromagnetic shutter ES2, and the third electromagnetic shutter ES3, for example, a liquid crystal shutter can be used.

The image projected by each of the first image projector S1, the second image projector S2, and the third image projector S3 may be a still image or a video image. The projected images may be the same or different from each other. Each of the first image projector S1, the second image projector S2, and the third image projector S3 may appropriately include an optical member such as a lens at a position facing the light emitting face.

As in the image displaying device 100 according to the first embodiment, the light emitted from the first image projector S1 is partially reflected by the first beam splitter BS1 and is incident on the second beam splitter BS2. The light is partially reflected by the second beam splitter BS2 and is incident on the first retroreflector RR1. The light is retroreflected by the first retroreflector RR1 and is re-incident on the second beam splitter BS2. The light re-incident on the second beam splitter BS2 partially transmits through the second beam splitter BS2 and is reflected by the dichroic mirror DM. The first image A1 is formed with the light reflected by the dichroic mirror DM at a position distant from the dichroic mirror DM with a first distance. The light formed as the first image A1 passes through the head-mounted display HMD and reaches the eye of the user. Accordingly, the user visually recognizes the first image A1 through the head-mounted display HMD.

The light emitted from the second image projector S2 partially transmits through the first beam splitter BS1 and the third beam splitter BS3, and is incident on the second beam splitter BS2. The light is partially reflected by the second beam splitter BS2 and is incident on the first retroreflector RR1. The remainder of the light transmits through the second beam splitter BS2 and is incident on the second retroreflector RR2. The light retroreflected by the first retroreflector RR1 partially transmits through the second beam splitter BS2 again and is incident on the dichroic mirror DM. The light retroreflected by the second retroreflector RR2 is partially reflected by the second beam splitter BS2 again and is incident on the dichroic mirror DM. The second image A2 is formed with the light reflected by the dichroic mirror DM at a position distant from the dichroic mirror DM with a second distance. The second distance is longer than the first distance. The light formed as the second image A2 passes through the head-mounted display HMD and reaches the eye of the user. Accordingly, the user visually recognizes the second image A2 in front of the first image A1 through the head-mounted display HMD.

The light emitted from the third image projector S3 is partially reflected by the third beam splitter BS3, transmits through the first beam splitter BS1, and is then incident on the second beam splitter BS2. The light is partially reflected by the second beam splitter BS2 and is incident on the first retroreflector RR1. The remainder of the light transmits through the second beam splitter BS2 and is incident on the second retroreflector RR2. The light retroreflected by the first retroreflector RR1 partially transmits through the second beam splitter BS2 again and is incident on the dichroic mirror DM. The light retroreflected by the second retroreflector RR2 is partially reflected by the second beam splitter BS2 again and is incident on the dichroic mirror DM. The third image A3 is formed with the light reflected by the dichroic mirror DM at a position distant from the dichroic mirror DM with a third distance. The third distance is longer than the first distance and shorter than the second distance. The light formed as the third image A3 passes through the head-mounted display HMD and reaches the eye of the user. Accordingly, the user visually recognizes the third image A3 in front of the first image A1 and behind the second image A2 through the head-mounted display HMD.

The fourth image H is formed with the light emitted from the head-mounted display HMD at a position distant from the head-mounted display with a fourth distance. The fourth distance is determined by an optical system included in the head-mounted display HMD. The fourth distance is determined so that the distance from the dichroic mirror DM is different from each of the first distance, the second distance, and the third distance. The fourth distance is determined such that the fourth image H is formed at a position where is in an opposite side of the positions where the first image A1, the second image A2 and the third image A3 are formed relative to the dichroic mirror DM. Accordingly, the user visually recognizes the fourth image H behind the first image A1, the second image A2, and the third image A3 through the head-mounted display HMD.

At the same time, light from the background passes through the dichroic mirror DM and the head-mounted display HMD and reaches the eye of the user. Accordingly, the user visually recognizes the first image A1, the second image A2, the third image A3, and the fourth image H having different positions in the depth direction as aerial imaged overlapping with the background.

As described above, in the image displaying device 200 of the present embodiment, a single image projecting device S operated by a signal inputted from a common image signal supplier includes the first image projector S1, the second image projector S2, and the third image projector S3 for forming a plurality of images at different positions in the depth direction. As a result, it is possible to reduce the space and weight in comparison with a configuration in which each of the first image projector S1, the second image projector S2, and the third image projector S3 is configured as a distinct image displaying device that is to be individually wired and driven. Compared to a configuration in which an individual image projecting device is assigned to each of a plurality of images formed at different positions in the depth direction and drive control is performed through individual wirings, it is possible to suppress an increase in the number of components, an increase in the size and weight of the device, an increase in the complexity of the device configuration, and the like. Accordingly, it is possible to improve the convenience of the image displaying device in which the projected image is displayed so as to appear to overlap with the background.

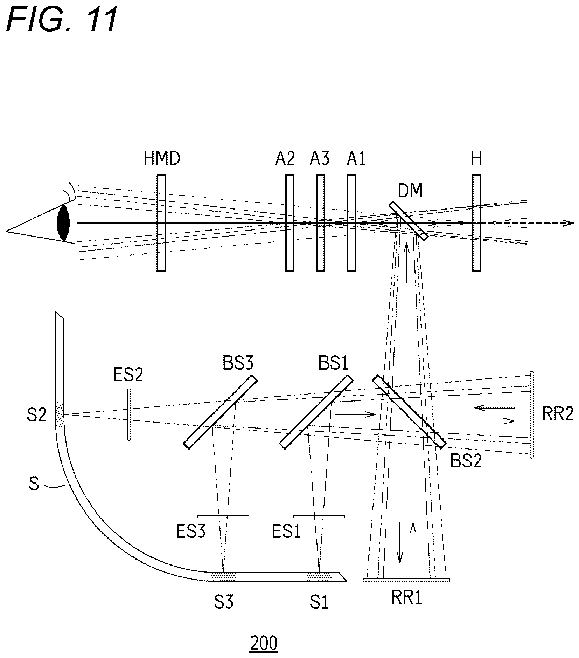

The image projecting device S may be configured to have a shape illustrated in FIG. 11. Specifically, an area located between a flat area in which the first image projector S1 and the third image projector S3 are provided and a flat area in which the second image projector S2 is provided may be configured to exhibit a curved face.

The area that does not contribute to the image projection is less necessary to be flat than the area that contributes to the image projection. Accordingly, in this example, in the image projecting device S, the area that does not contribute to the image projection is configured to exhibit a curved face. According to such a configuration, since the space occupied by the image projecting device S can be reduced, it is possible to further suppress an increase in the size of the device.

In this example, an area in the image projecting device S that does not contribute to the image projection exhibits a continuous curved face. However, a configuration in which a plurality of planes having different inclination angles are arranged in series or a configuration in which a curved face and a flat face are combined may also be adopted in accordance with the position and size of the above area.

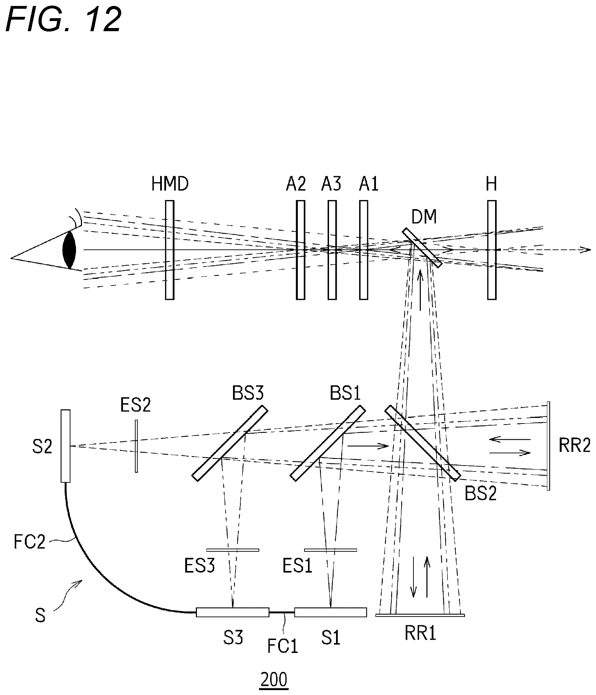

As illustrated in FIG. 12, the image projecting device S may include a first flexible cable FC1 and a second flexible cable FC2. The first flexible cable FC1 connects the first image projector S1 and the third image projector S3 so as to allow communication therebetween. The second flexible cable FC2 connects the second image projector S2 and the third image projector S3 so as to allow communication therebetween. Accordingly, by inputting a signal from an image signal supplier common to any of the first image projector S1, the second image projector S2, and the third image projector S3, the signal can be supplied to the other image projectors to perform the image projecting operation.

In this case, each of the first image projector S1, the second image projector S2, and the third image projector S3 may be configured by a liquid crystal display device including a backlight, an organic EL display device or an inorganic EL element that emits light, a projector device using a light source and a modulation element, or the like.

In addition, since the first flexible cable FC1 and the second flexible cable FC2 have flexibility, it is possible to increase the degree of freedom in layouts of the first image projector S1, the second image projector S2, and the third image projector S3 for obtaining a desired optical system. In addition, by replacing an area of the image projecting device S that would not contribute to the image projection with a flexible cable, it is possible to reduce the weight of the device.

The number, length, shape, and the like of each of the first flexible cable FC1 and the second flexible cable FC2 can be appropriately determined.

The configuration according to the second embodiment described above is a mere example for facilitating understanding of the gist of the presently disclosed subject matter. The configuration according to the second embodiment can be appropriately modified without departing from the gist of the presently disclosed subject matter.

The number of the image projectors included in the image projecting device S is not limited to three. There may be two or four or more. The number of beam splitters is also appropriately determined according to the number of image projectors included in the image projecting device S.

In the configuration illustrated in each of FIGS. 10 to 12, the position of the first image A1, the position of the second image A2, the position of the third image A3, and the position of the fourth image H visually recognized by the user are different in the depth direction. However, at least one of the position of the first image A1, the position of the second image A2, the position of the third image A3, and the position of the fourth image H may be the same as at least one of the other three positions in the depth direction.

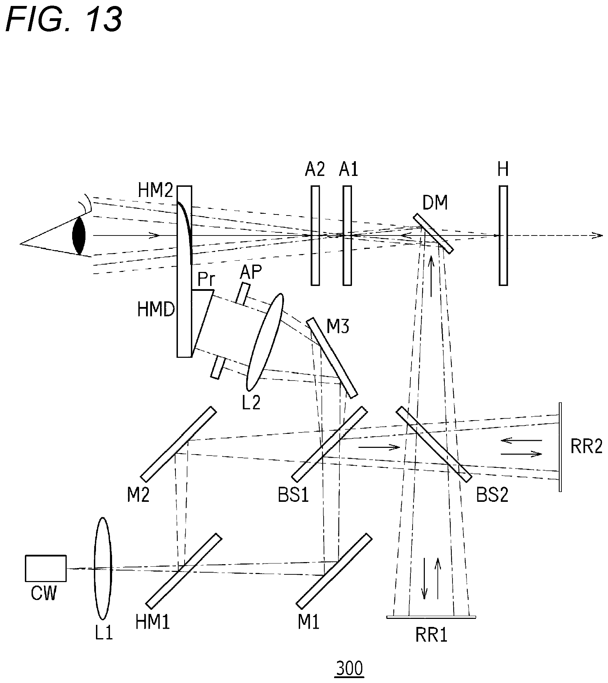

FIG. 13 illustrates a configuration of an image displaying device 300 according to a third embodiment. Components that are substantially the same as those of the image displaying device 100 illustrated in FIG. 1 are assigned with the same reference numerals, and repetitive descriptions for those will be omitted.

Through the use of the image displaying device 300, the user visually recognizes a first image A1, a second image A2, and a third image H at positions different from each other in the depth direction.

The image displaying device 300 includes a light source section CW. The light source section CW is a device for emitting laser light for projecting the first image A1, the second image A2, and the third image H. As the light source section CW, for example, a semiconductor laser device including a semiconductor laser element and a control circuit can be used. The wavelength of the laser light emitted from the light source section CW is not limited as long as it is in the visible light range, but is preferably any of red, blue, and green. The light emitted from the light source section CW may be monochromatic or may be a mixture of a plurality of colors. The light source section CW may be configured to emit red, blue, and green light in a time sharing manner. The light emitted by the light source section CW may be continuous light or pulsed light. The light source section CW may include a collimator lens or other optical elements. The light source section CW can emit light including a prescribed image by providing a liquid crystal display element or a DMD (Digital Mirror Device).

The image displaying device 300 includes a first mirror M1, a second mirror M2, a third mirror M3, and a prism Pr. Each of the first mirror M1, the second mirror M2, and the third mirror M3 is a substantially flat plate-shaped optical element that reflects light incident on a reflective surface, and is disposed so as to form an angle of 45 degrees with respect to the up-down direction and the depth direction. The prism Pr is an optical element for introducing light into a light guide of a head-mounted display HMD.

The image displaying device 300 includes a first lens L1, a second lens L2, and a first half mirror HM1. Each of the first lens L1 and the second lens L2 is disposed on the path of the laser light emitted from the light source section CW. Each of the first lens L1 and the second lens L2 is an optical element that condenses or enlarges the laser light. The first lens L1 is disposed between the light source section CW and the first half mirror HM1. The second lens L2 is disposed between the third mirror M3 and the prism Pr. The number and the position of the lenses to be disposed on the path of the laser light can be appropriately determined according to the positions of the respective images to be formed.

The first half mirror HM1 is a substantially flat plate-shaped optical element that partially reflects light incident on one surface and transmits the remainder of the light. The first half mirror HM1 is disposed so as to form an angle of 45 degrees with respect to the up-down direction and the depth direction. Any balance between the reflectivity and the transmittance of the first half mirror HM1 can be selected. For example, each of the reflectance and the transmittance may be 50%.

The image displaying device 300 includes an aperture AP. The aperture AP is an optical element for allowing only light reaching a limited area to pass through. The aperture AP is disposed between the second lens L2 and the prism Pr. Accordingly, the aperture AP limits the diameter of the light condensed by passing through the second lens L2 and makes the light incident on an incident face of the prism Pr.

The laser light emitted from the light source section CW passes through the first lens L1 and is incident on the first half mirror HM1. The laser light partially transmits through the first half mirror HM1 and is directed to the first mirror M1. The remainder of the laser light is reflected by the first half mirror HM1 and is directed to the second mirror M2. The light incident on the first mirror M1 is reflected by the reflective surface and is incident on one face of the first beam splitter BS1. The light incident on the second mirror M2 is reflected by the reflective surface and is incident on the other face of the first beam splitter BS1.

In the present embodiment, the head-mounted display HMD includes a flat light guide plate and a second half mirror HM2. The second half mirror HM2 is formed in the light guide plate. The second half mirror HM2 is configured to partially reflect the light incident on the prism Pr and propagating in the light guide plate toward the eye of the user. The second half mirror HM2 is a substantially flat plate-shaped optical element that partially reflects the light incident on one face thereof and transmits the remainder of the light. Any balance between the reflectivity and the transmittance of the second half mirror HM2 can be selected. For example, each of the reflectance and the transmittance may be 50%.

The dichroic mirror DM is an optical member that reflects wavelengths of laser light emitted from the light source section CW and transmits light of other wavelengths. The dichroic mirror DM is disposed above the first retroreflector RR1 and the second beam splitter BS2. The dichroic mirror DM is inclined so as to form an angle of 45 degrees with respect to the depth direction.

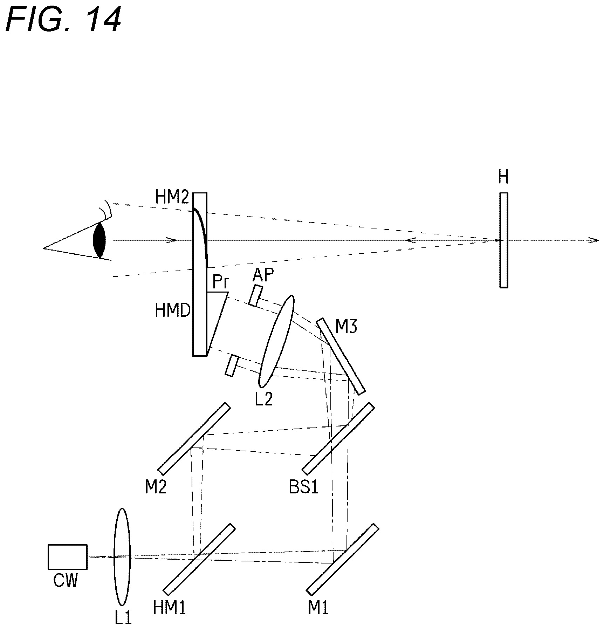

With reference to FIG. 14, an operation of a part of the image displaying device 300 will be described. The laser light emitted from the light source section CW and incident on the one face of the first beam splitter BS1 via the first mirror M1 partially transmits through the first beam splitter BS1 and reaches the third mirror M3. On the other hand, the laser light emitted from the light source section CW and incident on the other face of the first beam splitter BS1 via the second mirror M2 is partially reflected by the first beam splitter BS1 and reaches the third mirror M3. The light reflected by the third mirror M3 passes through the second lens L2 and the aperture AP and enters the prism Pr. The light incident on the prism Pr travels through the prism Pr and the light guide plate of the head-mounted display HMD and reaches the second half mirror HM2. The light reflected by the second half mirror HM2 is incident on the eye of the user.

As illustrated with dashed lines in FIG. 14, the light traveling from the second half mirror HM2 toward the user's eye spreads toward the user's eye by appropriately designing the shape of the second half mirror HM2. Accordingly, the user visually recognizes the third image H formed behind the head-mounted display HMD. Since the head-mounted display HMD and the second half mirror HM2 are formed of a translucent material, the background lying on the visual line of the user can also be visually recognized. The third mirror M3, the second lens L2, the aperture AP, the prism Pr, and the head-mounted display HMD in this example constitute an example of the first imaging optics.

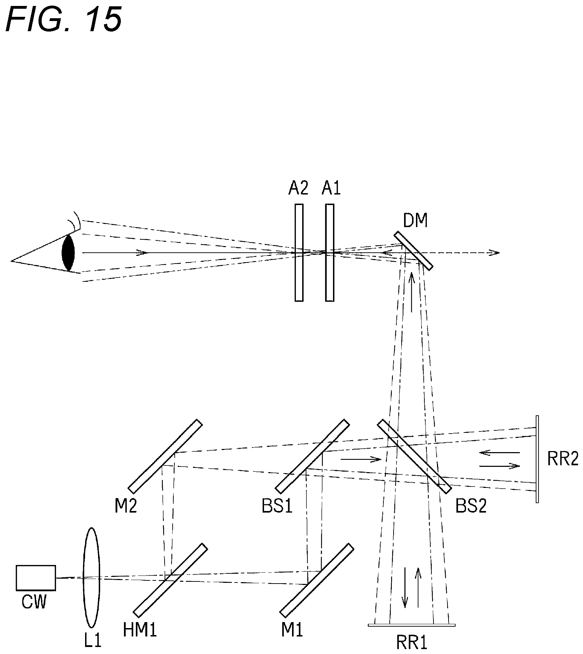

An operation of another part of the image displaying device 300 will be described with reference to FIG. 15. The laser light emitted from the light source section CW and incident on the one face of the first beam splitter BS1 via the first mirror M1 is partially reflected by the first beam splitter BS1 and reaches the second beam splitter BS2. On the other hand, the laser light emitted from the light source section CW and incident on the other face of the first beam splitter BS1 via the second mirror M2 partially transmits through the first beam splitter BS1 and reaches the second beam splitter BS2.

The laser light reaching the second beam splitter BS2 is partially reflected by the second beam splitter BS2 and is directed to the first retroreflector RR1. The laser light retroreflected by the first retroreflector RR1 partially transmits through the second beam splitter BS2 and is incident on the dichroic mirror DM. Another portion of the laser light reaching the second beam splitter BS2 transmits through the second beam splitter BS2 and is directed to the second retroreflector RR2. The laser light retroreflected by the second retroreflector RR2 is partially reflected by the second beam splitter BS2 and is incident on the dichroic mirror DM.

The first image A1 and the second image A2 are formed with the light reflected by the dichroic mirror DM in a space located between the head-mounted display HMD and the dichroic mirror DM. The light formed as the first image A1 and the second image A2 passes through the head-mounted display HMD and reaches the eye of the user. Accordingly, the user visually recognizes the first image A1 and the second image A2 behind the head-mounted display HMD. The second beam splitter BS2, the first retroreflector RR1, the second retroreflector RR2, and the dichroic mirror DM in this example constitute an example of the second imaging optics.

Since both the laser light reflected by the second beam splitter BS2 and the laser light transmitted through the second beam splitter BS2 are subjected to the image forming with the dichroic mirror DM, it is possible to suppress degradation in the brightness of the first image A1 and the second image A2 formed in the space between the user's eyes and the background.

In FIG. 13, the path of the laser light reflected by the first mirror M1 is illustrated with chain lines, and the path of the laser light reflected by the second mirror M2 is illustrated with dashed lines. The difference in the optical path length via the first mirror M1 and the optical path length via the second mirror M2 is reflected in the difference in the positions where the first image A1 and the second image A2 are formed. The positions where the first image A1 and the second image A2 are formed can also be made different by changing an enlargement factor of one of the laser lights by, for example, additionally disposing a lens in each optical path.

As a result, the user visually recognizes the first image A1, the second image A2, and the third image H having different positions in the depth direction as aerial images overlapping with the background.

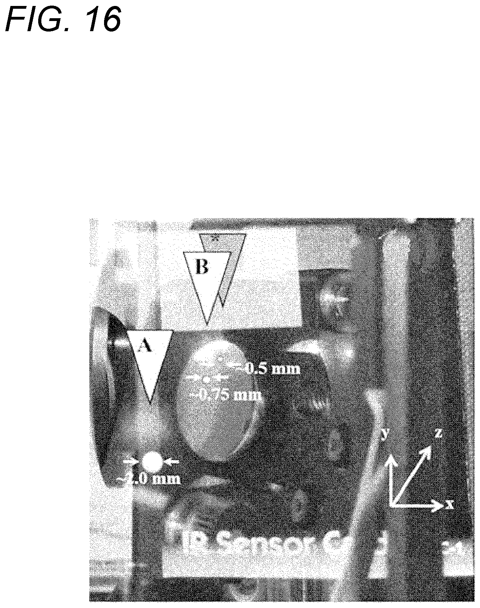

FIG. 16 illustrates aerial images displayed by the image displaying device 300. Specifically, it is illustrated a photograph obtained by capturing an image of the direction in which the head-mounted display HMD and the dichroic mirror DM are disposed as viewed from the position of the user's eye in FIG. 13. The x-axis direction, the y-axis direction, and the z-axis direction in FIG. 13 correspond to the left-right direction, the up-down direction, and the depth direction in FIG. 13, respectively.

In this example, laser light corresponding to a circular image is emitted from the light source section CW, and is imaged as three circular images at positions different from each other in the z-axis direction. The circular image having a diameter of 2 mm formed at a position indicated by a triangle with the symbol "A" corresponds to the second image A2 in FIG. 13. The circular image having a diameter of 0.75 mm formed at a position indicated by a triangle with the symbol "B" corresponds to the first image A1 in FIG. 13. The circular image having a diameter of 0.5 mm formed at a position indicated by a triangle with the symbol "^{∗}" corresponds to the third image A3 in FIG. 13. In addition, a measurement device used in the experiment can be visually recognized as a background. Even if the first image A1, the second image A2, and the third image H, which are aerial images, are displayed so as to overlap with the background, it is understood that both the background and the aerial images can be visually recognized in a satisfactory manner.

According to the configuration of the present embodiment described above, it is possible to form images to be projected on the eye of the user at a plurality of positions different from each other in the depth direction while using a single light source section CW. In addition, since the laser light emitted from the light source section CW and then transmitted through the first beam splitter BS1 and the laser light emitted from the light source section CW and then reflected by the first beam splitter BS1 are subjected to the image forming with individual imaging optical systems, it is possible to increase the degree of freedom relating to the adjustment of the positions where the images are formed. Accordingly, it is possible to improve the convenience of the image displaying device in which the projected image is displayed so as to appear to overlap with the background.

It should be noted that the images formed by the second imaging optics need not necessarily be plural. That is, one of the first image A1 and the second image A2 can be omitted.

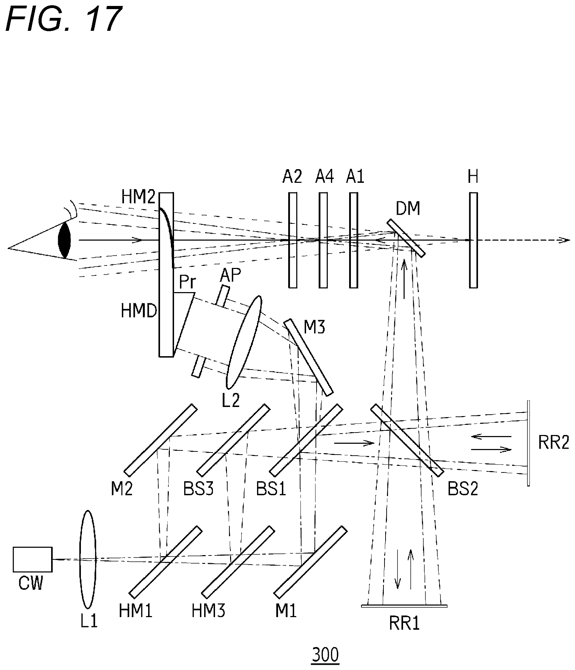

On the other hand, as illustrated in FIG. 17, the number of images to be formed by the second imaging optics can be increased to three or more. In addition to the configuration illustrated in FIG. 13, the image displaying device 300 according to the present example includes a third half mirror HM3 and a third beam splitter BS3.

The laser light emitted from the light source section CW passes through the first lens L1 and is incident on the first half mirror HM1. The laser light incident on the first half mirror HM1 partially transmits through the first half mirror HM1 and is directed to the third half mirror HM3. Another portion of the laser light incident on the first half mirror HM1 is reflected by the first half mirror HM1 and is directed toward the second mirror M2. The laser light incident on the third half mirror HM3 partially transmits through the third half mirror HM3 and is directed to the first mirror M1. Another portion of the laser light incident on the third half mirror HM3 is reflected by the third half mirror HM3 and is incident on one face of the third beam splitter BS3.

The laser light reflected by the first mirror M1 is incident on one face of the first beam splitter BS1. The laser light reflected by the second mirror M2 is incident on the other face of the third beam splitter BS3. The laser light transmits through the third beam splitter BS3 and is incident on the other face of the first beam splitter BS1. The light incident on the one face of the third beam splitter BS3 is also reflected by the third beam splitter BS3 and is incident on the other face of the first beam splitter BS1.

The dichroic mirror DM forms a fourth image A4 with the laser light passing through the third half mirror HM3 and the third beam splitter BS3. Since the optical path length for obtaining the fourth image A4 is different from the optical path length for obtaining each of the first image A1 and the second image A2, the position where the fourth image A4 is formed is different from the position where each of the first image A1 and the second image A2 is formed. In this example, the fourth image A4 is formed in the space between the first image A1 and the second image A2. Accordingly, the user visually recognizes the fourth image A4 in front of the first image A1 and behind the second image A2 through the head-mounted display HMD. As described with reference to FIG. 13, the position where the fourth image A4 is formed can also be adjusted by appropriately arranging an optical element such as a lens on the optical path for obtaining the fourth image A4.

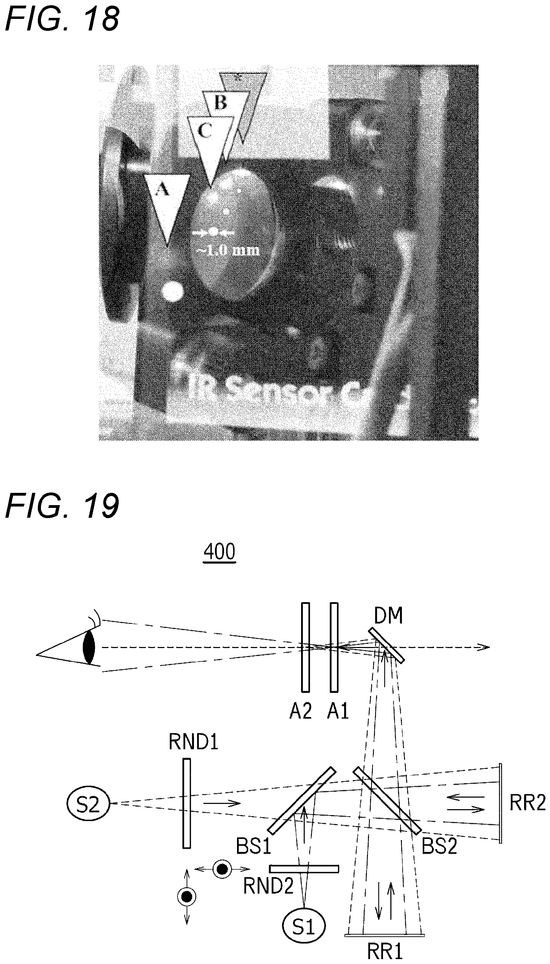

FIG. 18 illustrates aerial images displayed by the image displaying device 300 illustrated in FIG. 17. The conditions for obtaining the photograph in this figure are the same as those described with reference to FIG. 16.

The circular image having a diameter of 1 mm formed at a position indicated by a triangle with the symbol "C" in FIG. 18 corresponds to the fourth image A4 in FIG. 17.

By adding another optical path including at least one of a half mirror and a beam splitter, the number of images to be formed by the second imaging optics can be further increased.

The configuration according to the third embodiment described above is a mere example for facilitating understanding of the gist of the presently disclosed subject matter. The configuration according to the third embodiment can be appropriately modified without departing from the gist of the presently disclosed subject matter.

In the third embodiment, the laser light reflected by the first beam splitter BS1 is subjected to the image forming with the first imaging optics, and the laser light transmitted through the first beam splitter BS1 is subjected to the image forming with the second imaging optics. However, it is also possible to adopt a configuration in which the laser light reflected by the first beam splitter BS1 is subjected to the image forming with the second imaging optics, and the laser light transmitted through the first beam splitter BS1 is subjected to the image forming with the first imaging optics.

FIG. 19 illustrates a configuration of an image displaying device 400 according to a fourth embodiment. Components that are substantially the same as those of the image displaying device 100 illustrated in FIG. 1 are assigned with the same reference numerals, and repetitive descriptions for those will be omitted.

Through the use of the image displaying device 400, the user visually recognizes a first image A1 projected from a first image projector S1 and a second image A2 projected from a second image projector S2 at positions different from each other in the depth direction.

The image displaying device 400 includes a first brightness adjuster RND1 and a second brightness adjuster RND2. The first brightness adjuster RND1 is an optical element that controls the brightness of the first image A1 to be formed by adjusting the amount of light emitted from the first image projector S1. The first brightness adjuster RND1 is an optical element that controls the brightness of the second image A2 to be formed by adjusting the amount of light emitted from the second image projector S2. As each of the first brightness adjuster RND1 and the second brightness adjuster RND2, for example, a circular variable ND filter, a polarizing plate, or the like can be used. It should be noted that a configuration in which the first image projector S1 itself serves as the first brightness adjuster RMD1 by controlling the amount of emitted light may also be employed. Similarly, a configuration in which the second image projector S2 itself serves as the second brightness adjuster RND2 by controlling the amount of emitted light may be employed.

In other words, by controlling the light reaching the first beam splitter BS1 from the first image projector S1 and the second image projector S2 with the first brightness adjuster RND1 and the second brightness adjuster RND2, respectively, the brightness of the first image A1 and the brightness of the second image A2 formed in the space located between the eyes and the background of the user are controlled.

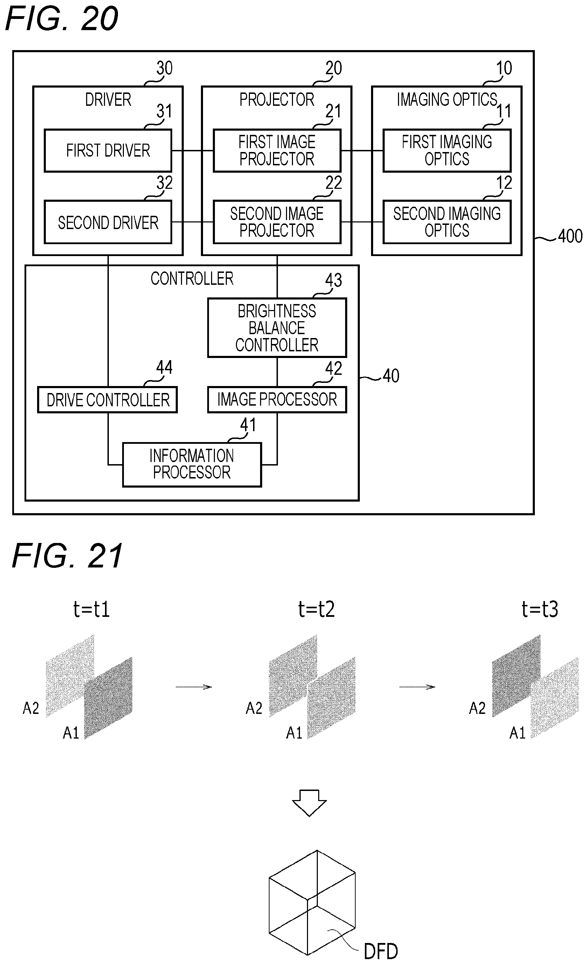

FIG. 20 illustrates a functional configuration of the image displaying device 400. The image displaying device 400 includes an imaging optics 10, a projector 20, a driver 30, and a controller 40.

The imaging optics 10 includes a first imaging optics 11 and a second imaging optics 12. The first imaging optics 11 is a component that forms the first image A1 at a prescribed position. In the configuration illustrated in FIG. 19, the first imaging optics 11 includes an optical member included in the first image projector S1, the first beam splitter BS1, the second beam splitter BS2, the first retroreflector RR1, the second retroreflector RR2, and the dichroic mirror DM. The second imaging optics 12 is a component that forms the second image A2 at a prescribed position. In the configuration illustrated in FIG. 19, the second imaging optics 12 includes an optical member included in the second image projector S2, the first beam splitter BS1, the second beam splitter BS2, the first retroreflector RR1, the second retroreflector RR2, and the dichroic mirror DM.

The projector 20 includes the first image projector S1 and the second image projector S2, and serves as a component that emits light for projecting a plurality of images. The first imaging optics forms the first image A1 with the light emitted from the first image projector S1 at a position distant from the dichroic mirror DM with a first distance. The second imaging optics forms the second image A2 with the light emitted from the second image projector S2 at a position distant from the dichroic mirror DM with a second distance.

The driver 30 includes a first driver 31 and a second driver 32. The first driver 31 is a component that mechanically changes the positions and angles of each of the first image projector S1 and the first imaging optics 11. The second driver 32 is a component that mechanically changes the positions and angles of the second image projector S2 and the second imaging optics 12. As each of the first driver 31 and the second driver 32, a known motor or actuator can be used. In a case where a part of a screen of a display device is used as the first image projector S1, a configuration in which the light emitting position is changed by changing the position of the part may also be an example of the first driver 31. Similarly, in a case where another part of the screen is used as the second image projector S2, a configuration in which the light emitting position is changed by changing the position of another part may also be an example of the second driver 32.

The controller 40 includes an information processor 41, an image processor 42, a brightness balance controller 43, and a drive controller 44, and serves as a component for controlling operations of respective components included in the image displaying device 400.

The image processor 42 is configured to perform processing of information corresponding to each image projected by the projector 20, and to transmit image signals to the first image projector S1 and the second image projector S2. The image signal is configured to cause each image projector to emit light for projecting an image.

The brightness balance controller 43 is configured to control the amount of light emitted from each of the first image projector S1 and the second image projector S2 by driving and controlling the first brightness adjuster RND1 and the second brightness adjuster RND2, and to adjust the brightness of the first image A1 to be formed and the brightness of the second image A2 to be formed.

The drive controller 44 is configured to control the operation of the driver 30 by transmitting control signals to the first driver 31 and the second driver 32. The control signal transmitted to the first driver 31 includes information for controlling the position and/or the angle of at least one of the first image projector S1 and the first imaging optics 11. The control signal transmitted to the second driver 32 includes information for controlling the position and/or the angle of at least one of the second image projector S2 and the second imaging optics 12.

The information processor 41 includes a processor that processes various information according to a prescribed procedure. The information processor 41 is configured to control the operations of the image processor 42, the brightness balance controller 43, and the drive controller 44, and to synchronize the processing of the image signal and the processing of the control signal. The functions of the processor can be implemented by a general-purpose microprocessor operating in cooperation with a general-purpose memory. Examples of the general-purpose microprocessor include a CPU and an MPU. Examples of the general-purpose memory include a ROM and a RAM. The functions of the processor may be implemented by a part of an exclusive integrated circuit. Examples of the dedicated integrated circuit include a microcontroller, an FPGA, and an ASIC.

With reference to FIG. 21, the relationship between the temporal brightness changes of the first image A1 and the second image A2 and a stereoscopic display caused by the DFD stereoscopic illusion will be described. In this figure, the brightness of the first image A1 and the second image A2 are expressed as gray scale shades. Dark color represents high brightness and light color represents low brightness.

At the time point t=t1, a first image A1 having higher brightness and a second image A2 having lower brightness are formed. In this case, a user recognizes, through the stereoscopic illusion, an image at a position closer to the position where the first image A1 having higher brightness is formed. As an example, in a case where the relative brightness of the first image A1 is 100 and the relative brightness of the second image A2 is 0, the position of a two-dimensional image recognized by the user with the stereo illusion is the position where the first image A1 is formed.

At the time point t=t2, the first image A1 and the second image A2 are formed with approximately the same brightness. In this case, a two-dimensional image recognized by the user with the stereoscopic illusion is located between the position where the first image A1 is formed and the position where the second image A2 is formed.

At the time point t=t3, a first image A1 having lower brightness and a second image A2 having higher brightness are formed. In this case, the user recognizes, through the stereoscopic illusion, an image at a position closer to the position where the second image A2 having higher brightness is formed. As an example, in a case where the relative brightness of the first image A1 is 0 and the relative brightness of the second image A2 is 100, the position of a two-dimensional image recognized by the user with the stereo illusion is the position where the second image A2 is formed.

In the above description, examples of the brightness balances of the first image A1 and the second image A2 of 100:0, 50:50, and 0:100 are described. Even with other brightness balances, the user recognizes, through the stereoscopic illusion, a two-dimensional image at an intermediate position between the position where the first image A1 is formed and the position where the second image A2 is formed. Specifically, assuming that the brightness balance of the first image A1 and the second image A2 is a:b, the user recognizes a two-dimensional image with the stereoscopic illusion at a position where the distance between the position where the first image A1 is formed and the position where the second image A2 is formed in the depth direction is divided by the ratio of a:b.

In the image displaying device 400 of the present embodiment, the brightness balance controller 43 is configured to change the brightness balance a:b between the first image A1 and the second image A2 over time. As a result, the user visually recognizes a two-dimensional image with the stereoscopic illusion at a plurality of positions between the position where the first image A1 is formed and the position where the second image A2 is formed. As a result, the user recognizes a stereoscopic illusion image DFD.

According to the configuration as described above, the user can visually recognize the stereoscopic illusion image DFD in front of the background. Accordingly, it is possible to improve the convenience of the image displaying device in which the projected image is displayed so as to appear to overlap with the background.

The brightness balance controller 43 controls the brightness balance from 100:0 to 0:100 in a single frame and repeats the same. As the number of steps of the brightness balance a:b in the single frame increases, the number of two-dimensional images to be recognized at intermediate positions in the stereoscopic illusion image DFD increases, so that a more stereoscopic representation is enabled. It should be noted that the two-dimensional image happens to be recognized as if it is merely moving in the depth direction in a case where the time length assigned for the single frame is too long. Accordingly, the time length assigned for the single frame is no more than preferably 200 milliseconds. In addition, from the viewpoint of the possibility of stereo illusion, it is preferable that the angle difference between two frames is no more than 7 minutes.

In addition to the display of the stereoscopic illusion image DFD with the brightness balance controller 43, it is possible to change the shape of the illusion image DFD to be visually recognized by changing the position where at least one of the first image A1 and the second image A2 is formed.

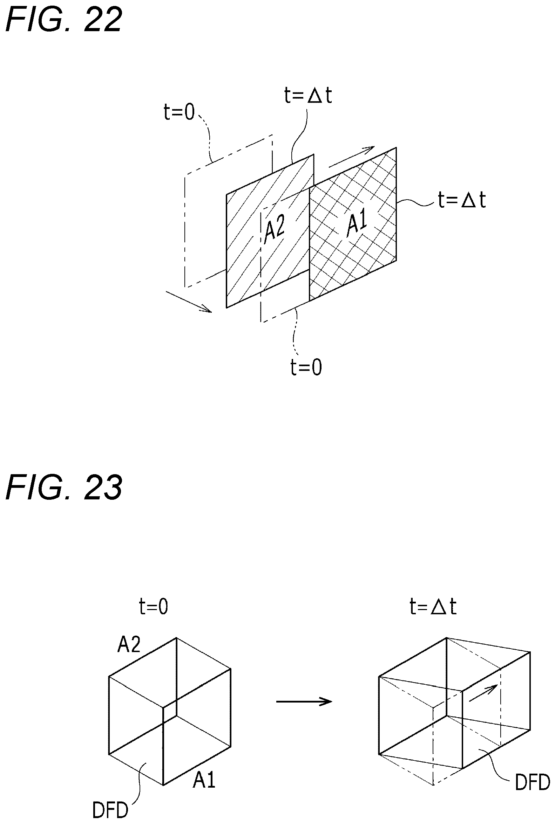

Specifically, as illustrated in FIG. 22, the drive controller 44 controls the first driver 31 and the second driver 32 so as to change the positions where the first image A1 and the second image A2 are formed between the time point t=0 and the time point t=Δt. In this example, the position where the first image A1 is formed is translated in the left-right direction, and the position where the second image A2 is formed is translated in the depth direction. However, both images can be moved in at least one of the left-right direction, the up-down direction, and the depth direction.

FIG. 23 illustrates a change in the shape of the illusion image DFD when only the position where the first image A1 is formed is translated in the left-right direction. At the time point t=0, the first image A1 is formed at a position distant from the dichroic mirror DM with a first distance in the depth direction, and the second image A2 is formed at a position distant from the dichroic mirror DM with a second distance in the depth direction. The brightness balance controller 43 changes the brightness balance between the first image A1 and the second image A2 over time as described above, so that an illusion image DFD having a rectangular parallelepiped shape is displayed in a single frame.

Thereafter, at a time point t=Δt, the drive controller 44 changes the position where the first image A1 is formed, and the brightness balance controller 43 changes the brightness balance between the first image A1 and the second image A2 over time, so that the rectangular parallelepiped-shaped illusion image DFD distorted is displayed in the single frame. At this timing, the user recognizes that the shape of the illusion image DFD has changed between the time point t=0 and the time point t=Δt. Accordingly, it is possible to provide the user with an animation with the stereoscopic illusion images DFD by changing the positions where the first image A1 and the second image A2 are formed every time the time length Δt elapses.

Here, the time length Δt needs to be longer than a time length assigned for a single frame required to depict a stereoscopic illusion image DFD. On the other hand, in order to cause the user to recognize the illusion image DFD as a video image, it is preferable to set the time length Δt so as to be no more than 200 milliseconds. More preferably, by setting the time length Δt so as to be in the range of 30 to 60 milliseconds, the user can recognize the illusion image DFD as a smooth video image.

The configuration according to the fourth embodiment described above is a mere example for facilitating understanding of the gist of the presently disclosed subject matter. The configuration according to the fourth embodiment can be appropriately modified without departing from the gist of the presently disclosed subject matter.

The present application is based on Japanese Patent Application No. 2019-220784 filed on December 5, 2019, Japanese Patent Application No. 2019-220785 filed on December 5, 2019, Japanese Patent Application No. 2019-225353 filed on December 13, 2019, and Japanese Patent Application No. 2019-235337 filed on December 25, 2019, the entire contents of which are incorporated herein by reference.

## Claims

1. An image displaying device, comprising:
a first image projector configured to emit light corresponding to a first image adapted to be projected to eyes of a user;
a beam splitter configured to reflect a portion of the light emitted from the first image projector in a first direction while allowing another portion of the light to transmit in a second direction;
a first retroreflector configured to retroreflect the light reflected in the first direction toward the beam splitter;
a second retroreflector configured to retroreflect the light transmitted in the second direction toward the beam splitter; and
an imaging optics configured to form an image corresponding to incident light in a space between the eyes of the user and a background,
wherein the beam splitter is configured to allow the light retroreflected by the first retroreflector to transmit toward the imaging optics while reflecting the light retroreflected by the second retroreflector toward the imaging optics.

2. The image displaying device according to claim 1, further comprising:
a second image projector configured to emit light corresponding to a second image adapted to be projected to the eyes of the user,
wherein the beam splitter is configured to reflect a portion of the light emitted from the second image projector in the first direction while allowing another portion of the light to transmit in the second direction.

3. The image displaying device according to claim 2,
wherein the imaging optics is a dichroic mirror configured to selectively reflect a wavelength of the light emitted from the first image projector and a wavelength of the light emitted from the second image projector.

4. The image displaying device according to claim 2 or 3,
a position where the first image is formed is different from a position where the second image is formed.

5. The image displaying device according to any one of claims 2 to 4, further comprising:
a third image projector configured to form a third image adapted to be projected to the eyes of the user in the space,
wherein a position where the third image is formed is different from a position where at least one of the first image and the second image is formed.

6. The image displaying device according to any one of claims 1 to 5, further comprising:
a first driver configured to change a relative position between the first image projector and the beam splitter.

7. The image displaying device according to any one of claims 2 to 5, further comprising:
a second driver configured to change a relative position between the second image projector and the beam splitter.

8. An image displaying device, comprising:
a first image projector configured to be driven by a signal supplied from an image signal supplier to emit light corresponding to a first image adapted to be projected to eyes of a user;
a second image projector configured to be driven by a signal supplied from the image signal supplier to emit light corresponding to a second image adapted to be projected to the eyes of the user;
an imaging optics configured to form an image corresponding to incident light in a space between the eyes of the user and a background, and
a beam splitter configured to reflect the light coming from the first image projector and incident on a first face thereof toward the imaging optics while allowing light coming from the second image projector and incident on a second face thereof to transmit toward the imaging optics.

9. The image displaying device according to claim 8,
wherein the first image projector is a light emitting area arranged at a first position in an image projecting device; and
wherein the second image projector is a light emitting area arranged at a second position in the image projecting device that is different from the first position.

10. The image displaying device according to claim 9,
wherein the image projecting device includes an electroluminescence device having flexibility.

11. The image displaying device according to claim 8,
wherein the first image projector and the second image projector are connected with a cable having flexibility.

12. The image displaying device according to any one of claims 8 to 11,
a position where the first image is formed is different from a position where the second image is formed.

13. An image displaying device, comprising:
a light source section configured to emit laser light corresponding to an image adapted to be projected to eyes of a user;
a first imaging optics configured to form an image corresponding to incident light at a first position in a space between the eyes of the user and a background;
a second imaging optics configured to form an image corresponding to incident light at a second position in the space that is different from the first position; and
a first beam splitter configured to reflect a portion of the laser light toward one of the first imaging optics and the second imaging optics while allowing another portion of the laser light to transmit toward the other one of the first imaging optics and the second imaging optics.

14. The image displaying device according to claim 13, further comprising:
a head-mounted display adapted to be worn by the user, and including at least a portion of the first imaging optics.

15. The image displaying device according to claim 14,
wherein the second imaging optics includes:
a second beam splitter configured to a portion of the laser light coming from the first beam splitter in a first direction while allowing another portion of the laser light to transmit in a second direction;
a first retroreflector configured to retroreflect one of the laser light reflected in the first direction and the laser light transmitted in the second direction toward the second beam splitter; and
a dichroic mirror configured to form the image with the laser light reflected or transmitted by the second beam splitter at the second position.

16. The image displaying device according to claim 15,
wherein the second imaging optics includes a second retroreflector configured to retroreflect the other one of the laser light reflected in the first direction and the laser light transmitted in the second direction toward the second beam splitter.

17. The image displaying device according to any one of claims 13 to 16, further comprising:
a first half mirror configured to allow a portion of the laser light emitted from the light source section to transmit while reflecting another portion of the laser light;
a first mirror configured to reflect one of the laser light transmitted through the first half mirror and the laser light reflected by the first half mirror toward a first face of the first beam splitter; and
a second mirror configured to reflect the other one of the light transmitted through the first half mirror and the laser light reflected by the first half mirror toward a second face of the first beam splitter.

18. An image displaying device, comprising:
a first image projector configured to emit light corresponding to a first image adapted to be projected to eyes of a user;
a second image projector configured to emit light corresponding to a second image adapted to be projected to the eyes of the user;
an imaging optics configured to form the first image at a first position in a space between the eyes of the user and a background, and to form the second image at a second position in the space that is different from the first position; and
a controller configured to control the first image projector and the second image projector so as to change a balance between a brightness of the first image and a brightness of the second image over time.

19. The image displaying device according to claim 18, further comprising:
a driver configured to change at least one of the first position and the second position.

20. The image displaying device according to claim 19,
wherein the driver is configured to change at least one of the first position and the second position in a direction that the first image and the second image are arranged.

21. The image displaying device according to claim 19 or 20,
wherein the driver is configured to change at least one of the first position and the second position in a direction that is orthogonal to a direction in which the first image and the second image are arranged.

22. The image displaying device according to any one of claims 18 to 21, further comprising:
a beam splitter configured to reflect a portion of the light emitted from the first image projector in a first direction while allowing another portion of the light in a second direction;
a first retroreflector configured to retroreflect the light reflected in the first direction toward the beam splitter;
a second retroreflector configured to retroreflect the light transmitted in the second direction toward the beam splitter; and
an imaging optics configured to form an image corresponding to incident light in the space,
wherein the beam splitter is configured to allow the light retroreflected by the first retroreflector to transmit toward the imaging optics while reflecting the light retroreflected by the second retroreflector toward the imaging optics.

23. The image displaying device according to claim 22,
wherein the beam splitter is configured to a portion of the light emitted from the second image projector in the first direction while allowing another portion of the light to transmit in the second direction.
